# EUROPÄISCHE PATENTSCHRIFT

(11) **EP 1 626 185 B1**
(45) Veröffentlichungstag und Bekanntmachung des Hinweises auf die Patenterteilung: **21.03.2007**
(21) Anmeldenummer: 05017309.5
(22) Anmeldetag: 09.08.2005
(51) Int. Cl.: F16B 5/02, F16B 35/04

(54) **Einstelleinheit zum Einstellen des Abstandes zwischen zwei Bauteilen**
Adjusting unit for adjusting the distance between two construction units
Unité de réglage à ajuster la distance entre deux unités de construction

(30) Priorität: 13.08.2004 DE 202004012733 U
(43) Veröffentlichungstag der Anmeldung: 15.02.2006
(73) Patentinhaber: Böllhoff Verbindungstechnik GmbH, 33649 Bielefeld (DE)
(72) Erfinder: Dembowsky, Hans-Joachim, 21035 Hamburg (DE); Jodeleit, Martin, 33617 Bielefeld (DE); Figge, Hans-Ulrich, 33758 Schloss-Holte (DE)
(74) Vertreter: Wehnert, Werner

(56) Entgegenhaltungen:
- EP-A- 0 533 513
- EP-A- 1 085 221
- DE-A1- 10 147 141
- US-A- 4 186 645
- US-A1- 2003 077 118

## Beschreibung

Die vorliegende Erfindung betrifft eine Einstelleinheit zum Einstellen des Abstandes zwischen einem fest angeordneten ersten Bauteil und einem nachgiebig gelagerten zweiten Bauteil.

Aus der DE 101 47 141 A1 ist eine verstellbare Schraubverbindung bekannt, die beispielsweise zum Befestigen einer Fahrzeug-Rückleuchte an einem Karosserieblech dient. Zwischen der Fahrzeugleuchte und anderen Karosserieteilen ist üblicherweise ein Spalt vorhanden, der insbesondere aus ästhetischen Gründen möglichst klein gehalten werden soll. Die Verstellbarkeit der vorbekannten Schraubverbindung erlaubt es, den Abstand zwischen dem fest angeordneten Karosserieblech und der nachgiebig gelagerten Rückleuchte zu verstellen, um auf diese Weise aufgrund von Herstellungstoleranzen vorhandene Schwankungen des Spaltes zwischen der Rückleuchte und den anderen Karosserieteilen auszugleichen.

Die vorbekannte Schraubverbindung besteht aus einer Mutter und einer Schraube. Die Mutter, die an dem fest angeordneten ersten Bauteil befestigt wird, hat eine Bohrung mit einem Gewindeabschnitt und einem glatten zylindrischen Abschnitt. Die Schraube, die über ein Kupplungsteil mit dem zweiten nachgiebig gelagerten Bauteil lösbar verbunden werden kann, ist mit mehreren umlaufenden Dichtrippen versehen, die bei Verstellbewegungen der Schraube relativ zu der Mutter mit dem glatten Bohrungsabschnitt der Mutter abdichtend zusammenwirken. Die Einstellschraube ist an beiden Ende mit einem Antriebsmerkmal versehen, so dass sie mittels eines Werkzeuges von jedem Ende her verstellt werden kann. Die Mutter ist als Blindnietmutter ausgebildet, die durch einen Nietwulst an dem ersten Bauteil festgelegt wird.

Eine Einstelleinheit zum Einstellen des Abstandsnietes zwischen einem fest angeordneten Bauteil und einem nachgiebig gelagerten Bauteil nach dem Oberbegriff des Patentanspruchs 1 ist aus DE 101 47 141 A1 und US-A-4 186 645 bekannt. Ähnliche Einstelleinheiten sind aus US 2003/077118 A1 und EP-A-0 533 513 bekannt, bei denen allerdings beide Bauteile fest angeordnet sind und die "Einstelleinheit" lediglich zum Ausgleichen von Fertigungstoleranzen im Abstand zwischen den beiden Bauteilen dient.

Der vorliegenden Erfindung liegt die Aufgabe zugrunde, eine Einstelleinheit zum Einstellen des Abstandes zwischen einem fest angeordneten ersten Bauteil und einem nachgiebig gelagerten zweiten Bauteil anzugeben, die sich durch konstruktive Einfachheit und kleinstmöglichen Montageaufwand auszeichnet.

Die Einstelleinheit gemäß der vorliegenden Erfindung ist in Anspruch 1 definiert.

Erfindungsgemäß besteht die Einstelleinheit aus einer Einstellschraube und einem hülsenartigen Aufnahmeteil, die über eine Gewindepaarung relativ zueinander verstellbar sind. Die Einstellschraube ist mittels einer an einem Ende vorgesehenen Anlagefläche an dem nachgiebig gelagerten zweiten Bauteil abstützbar, und das hülsenartige Aufnahmeteil ist durch einen Ring-flansch an dem fest angeordneten ersten Bauteil abstützbar. Hierbei ist vorgesehen, dass der Schraubenkopf durch Anlage an dem Aufnahmeteil als Begrenzung für Verstellbewegungen der Einstellschraube in Richtung in das Aufnahmeteil hinein dient, und dass die Einstellschraube in einem Endbereich entgegengesetzt zu dem Schraubenkopf eine umlaufende Schulter hat, die durch Anlage an dem Aufnahmeteil als Begrenzung für Verstellbewegungen der Einstellschraube in Richtung aus dem Aufnahmeteil heraus dient.

Die Einstelleinheit kann zum Feineinstellen beispielsweise einer nachgiebig gelagerten Rückleuchte eines Kraftfahrzeuges verwendet werden, um aufgrund von Fertigungstoleranzen vorhandene Schwankungen im Spalt zwischen der Rückleuchte und anderen Karosserieteilen auszugleichen.

Gemäß einer bevorzugten Ausführungsform ist vorgesehen, dass der Ringflansch des Aufnahmeteils an dem ersten Bauteil durch mehrere an dem Aufnahmeteil vorgesehene Federschenkel gehalten wird, wobei die Federschenkel jeweils eine mit vorgegebenem axialen Abstand zu dem Ringflansch angeordnete Stirnfläche haben und radial einwärts umbiegbar sind, um die Einstelleinheit in ein Loch des ersten Bauteils einführen und hierbei die Federabschnitte umbiegen zu können, bis das erste Bauteil zwischen den Stirnflächen der zurückgefederten Federschenkel und dem Ringflansch eingespannt ist.

Um die Einstelleinheit an dem fest angeordneten ersten Bauteil festzulegen, muss somit lediglich die vormontierte Einstelleinheit in das Loch des ersten Bauteils eingesteckt werden. Der im Stand der Technik erforderliche Nietvorgang für die Blindnietmutter entfällt somit, wodurch sich die Montage erheblich vereinfacht. Außerdem kann sowohl die Einstellschraube wie auch das hülsenartige Aufnahmeteil aus Kunststoffen hergestellt werden, die aufeinander abzustimmen sind. Einstellschraube und Aufnahmeteil lassen sich somit durch Spritzgießen herstellen, was entsprechend niedrige Herstellungskosten ermöglicht. Ferner wird hierdurch die Gefahr von Korrosion vermieden.

Weitere vorteilhafte Ausgestaltungen der Erfindung sind in den Unteransprüchen definiert.

Anhand der Zeichnungen wird ein bevorzugtes Ausführungsbeispiel der Erfindung näher erläutert. Es zeigt:
Fig. 1 einen Längsschnitt durch eine erfindungsgemäß ausgebildete Einstelleinheit in Blickrichtung der Pfeile I-I in Fig. 2;
Fig. 2 eine Ansicht der Einstelleinheit der Fig. 1 von unten;
Fig. 3 einen Schnitt in Blickrichtung der Pfeile III-III in Fig. 1;

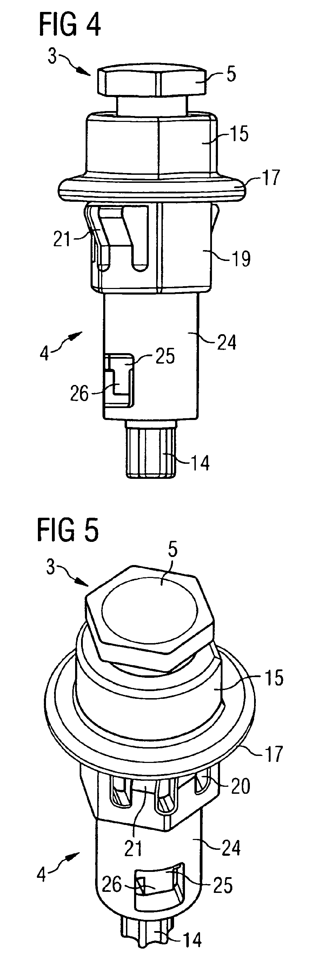

Fig. 4 und 5 perspektivische Ansichten der Einstelleinheit;
Fig. 6 einen Längsschnitt durch eine Einstellschraube der Einstelleinheit;
Fig. 7 einen Längsschnitt durch das hülsenartige Aufnahmeteil der Einstelleinheit;
Fig. 8 eine der Fig. 1 entsprechende Ansicht der Einstelleinheit in einer Endstellung der Einstellschraube;
Fig. 9 eine der Fig. 8 entsprechende Ansicht der Einstelleinheit in der entgegengesetzten Endstellung der Einstellschraube.

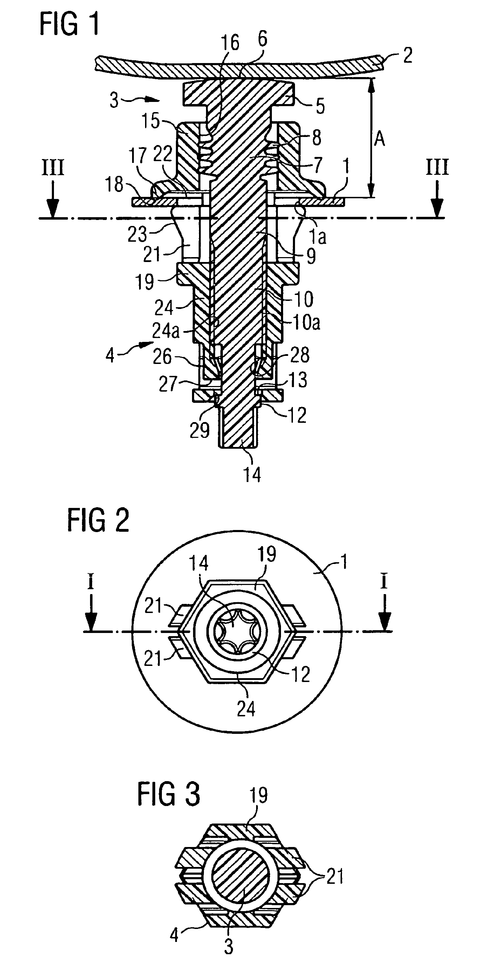

Die in den Fig. 1 bis 3 dargestellte Einstelleinheit dient zum Einstellen des Abstandes A zwischen einem fest angeordneten ersten Bauteil 1 und einem nachgiebig angeordneten zweiten Bauteil 2. Das Bauteil 1, das mit einem Loch 1a versehen ist, ist beispielsweise ein Karosserieblech eines Fahrzeuges, während das Bauteil 2 beispielsweise der Halter einer Rückleuchte ist, der elastisch in die dargestellte Lage vorgespannt ist. Wie bereits eingangs erläutert, ist zwischen der Rückleuchte und anderen Karosserieteilen üblicherweise ein Spalt (nicht gezeigt) vorhanden, der durch die Einstelleinheit minimiert werden soll. Die Einstelleinheit sollte vormontierbar, selbsthemmend und fluiddicht sein, damit Fluide wie Wasser, Öl- und Benzindämpfe, etc. aus der Umgebung nicht in den Zwischenraum zwischen den Bauteilen 1 und 2 gelangen kann.

Die Einstelleinheit besteht aus einer Einstellschraube 3 und einem hülsenartigen Aufnahmeteil 4. Die Einstellschraube 3 und das Aufnahmeteil 4 können aus Kunststoffen hergestellt sein, die aufeinander abgestimmt werden. So sollte der Kunststoff der Einstellschraube 3 härter als der Kunststoff des Aufnahmeteils 4 sein. Die Einstellschraube 3 besteht beispielsweise aus einem schlagzähen Kunststoff wie Polyamid und kann eine Faserverstärkung wie z.B. eine Glasfaserverstärkung enthalten. Das Aufnahmeteil 4 kann z.B. aus einem Thermoplasten bestehen. Grundsätzlich ist jedoch auch eine umgekehrte Abstimmung bzw. Ausbildung der Kunststoffe möglich. Sowohl die Einstellschraube 3 wie auch das Aufnahmeteil 4 werden zweckmäßigerweise durch Spritzgießen hergestellt.

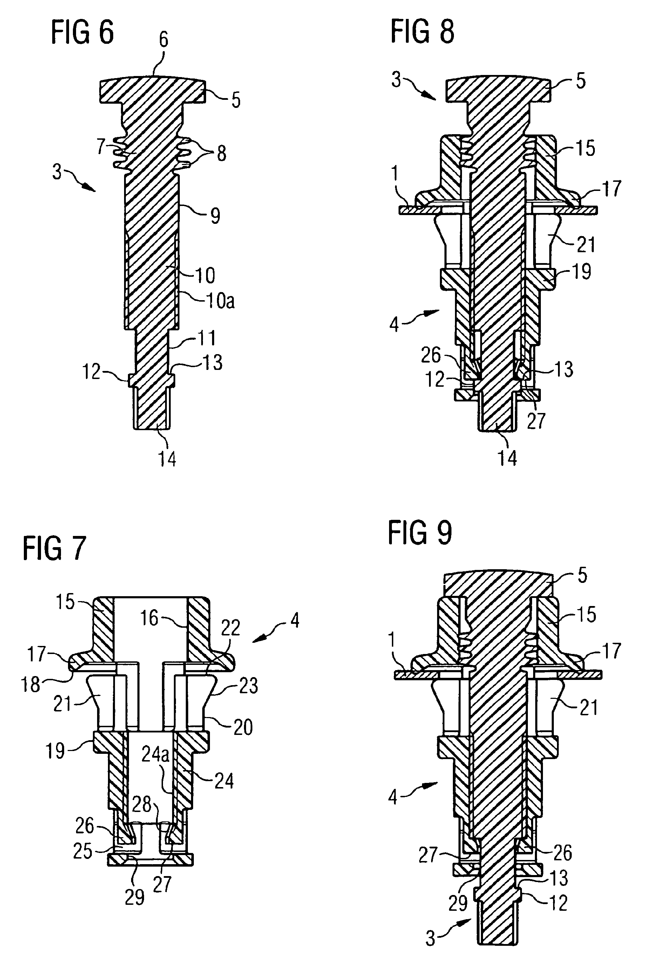

Die Einstellschraube 3 besteht, wie zusätzlich aus Fig. 6 hervorgeht, aus einem Schaft mit einem Schraubenkopf 5, der an seiner Oberseite eine Anlagefläche 6 zur Anlage an dem Bauteil 2 hat, einem Dichtungsabschnitt 7 mit mehreren (im Ausführungsbeispiel drei) umlaufenden Dichtrippen 8, einem zylindrischen Zwischenabschnitt 9, einem Gewindeabschnitt 10 mit einem Gewinde 10a, einem durchmesserverringerten zylindrischen Abschnitt 11, einem Ringbund 12 mit einer Schulter 13 und einem Endabschnitt 14. Die Einstellschraube 3 ist an ihren beiden axialen Enden mit einem Antriebsmerkmal versehen, um die Einstellschraube 3 von beiden axialen Enden her mittels eines Werkzeuges verstellen zu können. Zu diesem Zweck ist der Schraubenkopf 5 als Sechskant und der Endabschnitt 14 als Innensechsrund ausgebildet. Es versteht sich, dass auch andere Antriebsmerkmale möglich sind.

Das Aufnahmeteil 4 besteht, wie zusätzlich in Fig. 7 zu sehen ist, aus einem hülsenartigen Körper mit einer durchgehenden Bohrung, welcher sich aus einem Dichtungsabschnitt 15, einem Ringflansch 17, einem Zwischenabschnitt 19 und einem Gewindeabschnitt 24 zusammensetzt.

Der Dichtungsabschnitt 15 hat eine glatte zylindrische Bohrung 16, die im zusammengebauten Zustand mit den Dichtrippen 8 der Einstellschraube 3 abdichtend zusammenwirkt. Genauer gesagt, sind die Dichtrippen 8 im Durchmesser gegenüber der glatten zylindrischen Bohrung 16 so überdimensioniert, dass sie mit einer bestimmten Anpresskraft gegen die Wandung der Bohrung 16 angedrückt werden. Das weichere Material des Aufnahmeteils 4 gibt dann der Belastung der Dichtrippen 8 nach, so dass sich die "harten" Dicht-rippen 8 radial in die "weiche" Wandung der Bohrung 16 eingraben. Die Dichtrippen wirken somit nicht nur als Fluidabdichtung, sondern sie sichern auch die axiale Lage der Einstellschraube 3 relativ zu dem Aufnahmeteil 4.

Wie bereits weiter oben angedeutet, besteht grundsätzlich auch die Möglichkeit, die Abstimmung der Werkstoffe umgekehrt zu wählen, so dass dann das Aufnahmeteil 4 aus einem härteren Kunststoff und die Einstellschraube 3 aus einem weicheren Werkstoff besteht.

An den Dichtungsabschnitt 15 schließt sich der Ringflansch 17 an, der eine (in Fig. 7 nach unten) konkav gewölbte Form hat, so dass er an seinem Außenrand mit einem axial nach unten vorstehenden Ringvorsprung 18 versehen ist.

An den Ringflansch 17 schließt sich der Zwischenabschnitt 19 an, der einen mehreckigen (im Ausführungsbeispiel sechseckigen) Querschnitt entsprechend dem Umriss des Loches 1a des Bauteils 1 hat. Der Zwischenabschnitt 19 ist mit diametral gegenüberliegenden fensterartigen Durchbrüchen 20 versehen, in denen mehrere (im Ausführungsbeispiel vier) Federschenkel 21 angeordnet sind.

Die Federschenkel 21 sind an ihren unteren axialen Enden an dem Zwischenabschnitt 19 angeformt, während sie im übrigen beabstandet zu dem Material des Zwischenabschnittes 19 so angeordnet sind, dass sie radial einwärts umgebogen werden können. Die Federschenkel 21 sind an ihren oberen axialen Enden jeweils mit einer Stirnfläche 22 versehen, die einen vorgegebenen Abstand zur Unterseite des Ringflansches 17 haben, so dass das erste Bauteil 1 zwischen dem Ringvorsprung 18 des Ringflansches 17 und den Stirnflächen 22 der Federschenkel 21 eingespannt werden kann, wie noch genauer erläutert wird. Die Federschenkel 21 sind ferner an ihren radial äußeren Rändern mit Einführschrägen 23 versehen.

Der sich an den Zwischenabschnitt 19 anschließende Gewindeabschnitt 24 ist mit einem Gewinde 24a versehen, der mit dem Gewinde 10a der Einstellschraube 3 eine Gewindepaarung zum Ermöglichen von Verstellbewegungen zwischen der Einstellschraube 3 und dem Aufnahmeteil 4 bildet. In seinem unteren Bereich ist der Gewindeabschnitt 24 mit zwei diametral gegenüberliegenden fensterartigen Durchbrüchen 25 versehen, in denen jeweils ein Federschenkel 26 angeordnet ist. Die Federschenkel 26 sind jeweils mit ihren oberen axialen Enden an dem Gewindeabschnitt 24 angeformt und sind im übrigen zu dem Material des Gewindeabschnitts 24 so beabstandet, dass sie radial nach außen umgebogen werden können. Die Federschenkel 26 haben an ihren unteren axialen Enden Stirnflächen 27, die im zusammengebauten Zustand mit der Schulter 13 der Einstellschraube 6 zur Begrenzung von Verstellbewegungen zusammenwirken, wie noch genauer erläutert wird. Ferner sind die Federschenkel 26 an ihren radial inneren Rändern mit Einführschrägen 28 versehen.

Die axial durchgehende Bohrung des hülsenartigen Aufnahmeteils 4 hat am axial unteren Ende des Aufnahmeteils 4 einen Bohrungsabschnitt 29, dessen Durchmesser dem Durchmesser des Ringbundes 12 der Einstellschraube 3 entspricht, so dass sich der Ringbund 12 durch den Bohrungsabschnitt 29 hindurch bewegen kann.

Es wird nun die Funktionsweise der Einstelleinheit beschrieben:

Zunächst wird die Einstelleinheit vormontiert, indem die Einstellschraube 3 mit dem Aufnahmeteil 4 verschraubt wird. Hierzu wird die Einstellschraube 3 in das Aufnahmeteil 4 eingesteckt, bis die Gewinde 10a und 24a der Einstellschraube 3 und des Aufnahmeteils 4 in Eingriff miteinander gelangen. Durch eine Relativdrehung zwischen der Einstellschraube 3 und dem Aufnahmeteil 4 wird dann die Einstellschraube 3 axial in das Aufnahmeteil 4 hineingezogen. Wenn sich der Ringbund 12 der Einstellschraube 6 an die Einführschrägen 28 der Federschenkel 26 anlegt, werden die Federschenkel 26 radial nach außen umgebogen. Hat der Ringbund 12 die Federschenkel 26 passiert, federn die Federschenkel 26 in ihre Ausgangslage zurück, in der sie in den durchmesserverringerten Abschnitt 11 der Einstellschraube 3 vorstehen.

Die Verstellbewegung der Einstellschraube 3 in das Aufnahmeteil 4 hinein wird durch Anlage des Schraubenkopfes 5 am oberen Ende des Aufnahmeteils 4 begrenzt, wie in Fig. 9 zu sehen ist. Die Verstellbewegung der Einstellschraube 3 in der entgegengesetzten Richtung wird durch Anlage der Schulter 13 des Ringbundes 12 an den Stirnflächen 27 der Federschenkel 26 begrenzt, wie in Fig. 8 dargestellt ist. Beim Vormontieren der Einstelleinheit wird die Einstellschraube 3 in eine Mittelstellung zwischen diesen beiden Endstellungen bewegt, so dass die Einstellschraube 3 aus dieser Mittelstellung heraus in entgegengesetzten axialen Richtungen um einen vorgegebenen Betrag (z.B. +/- 2 mm) verstellt werden kann.

Wie bereits vorstehend erwähnt wurde, wird die Einstellschraube 3 in ihrer voreingestellten Mittelstellung durch die mit der zylindrischen Bohrung 16 zusammenwirkenden Dichtrippen 8 axial gesichert. Die Einstelleinheit hat somit eine selbsthemmende Eigenschaft.

Die vormontierte Einstelleinheit wird nun in das bereits fest angebrachte Bauteil 1 (z.B. Karosserieblech) eingesetzt, indem die Einstelleinheit von oben in das Loch 1a des Bauteils 1 eingeführt wird. Hierbei wird der Zwischenabschnitt 19 mit seinem mehreckigen Querschnitt zu dem mehreckigen Umriss des Loches 1a des Bauteils 1 ausgerichtet, um den Zwischenabschnitt 19 in das Loch 1a einsetzen zu können. Wenn die Einführschrägen 23 der Federschenkel 21 mit den Rändern des Loches 1a in Anlage gelangen, werden die Federschenkel 21 radial einwärts umgebogen, so dass die Federschenkel 21 durch das Loch 1a hindurch geführt werden können. Legt sich der Ringvorsprung 18 des Ringflansches 17 des Aufnahmeteils 4 an die Oberseite des Bauteils 1 an, wird der Ringflansch 17 durch weiteren axialen Druck auf die Einstelleinheit unter elastischer Verformung etwas aufgebogen, so dass der Abstand zwischen dem ringförmigen Vorsprung 18 und den Stirnflächen 22 der Federschenkel 21 entsprechend vergrößert wird. Die Federschenkel 21 können dann in ihre Ausgangslage zurückfedern. Wird dann der axiale Druck auf die Einstelleinheit gelöst, so wird das Bauteil 1 aufgrund der elastischen Vorspannung des Ringflansches 17 zwischen dem Ringflansch 17 und den Federschenkeln 21 eingespannt. Die Einstelleinheit ist damit an dem Bauteil 1 festgelegt.

Hierauf wird das Bauteil 2 montiert, das dann unter Vorspannung, erzeugt durch Federmittel (nicht gezeigt) nachgiebig gegen die Anlagefläche 6 der Einstellschraube 3 angedrückt wird. Durch ein an dem Endabschnitt 14 der Einstellschraube 3 angreifendes Werkzeug (nicht gezeigt) kann nun die Einstellschraube 3 relativ zu dem Aufnahmeteil 4 und somit relativ zu dem Bauteil 1 axial verstellt werden, wodurch das an der Einstellschraube 3 anliegende Bauteil 2 entsprechend verstellt wird. Hiermit kann das Bauteil 2 somit in seiner Lage feineingestellt werden, um einen Toleranzausgleich hinsichtlich der Lage des Bauteils 2 vorzunehmen. Anders ausgedrückt, lässt sich hierdurch der Abstand A zwischen den Bauteilen 1 und 2 feineinstellen, um einen Spalt zwischen dem Bauteil 2 (Rückleuchte) und weiteren Karosserieteilen (nicht gezeigt) zu minimieren.

In dieser feineingestellten Lage wird die Einstellschraube 3 wiederum durch die mit der Bohrung 16 zusammenwirkenden Dichtrippen 8 axial gesichert, wie bereits oben erläutert wurde. Das Bauteil 2 kann nun in seiner feineingestellten Lage durch nicht dargestellte Befestigungsmittel endgültig festgelegt werden.

## Patentansprüche

1. Einstelleinheit zum Einstellen des Abstandes zwischen einem fest angeordneten ersten Bauteil (1) und einem nachgiebig gelagerten zweiten Bauteil (2), bestehend aus einer mit einem Schraubenkopf (5) versehenen Einstellschraube (3) und einem hülsenartigen Aufnahmeteil (4), die über eine Gewindepaarung (10a, 24a) relativ zueinander verstellbar sind, wobei die Einstellschraube (3) durch eine an einem Ende vorgesehenen Anlagefläche (6) an dem nachgiebig gelagerten zweiten Bauteil (2) lose abstützbar ist und das Aufnahmeteil (4) durch einen Ringflansch (17) an dem fest angeordneten ersten Bauteil (1) lose abstützbar ist, so dass der Abstand (A) zwischen den beiden Bauteilen (1, 2) durch eine Verstellbewegung der Einstellschraube (3) relativ zu dem Aufnahmeteil (4) eingestellt werden kann, **dadurch gekennzeichnet, dass** der Schraubenkopf (5) durch Anlage an dem Aufnahmeteil (4) als Begrenzung für Verstellbewegungen der Einstellschraube (3) in Richtung in das Aufnahmeteil (4) hinein dient, und dass die Einstellschraube (3) in einem Endbereich entgegengesetzt zu dem Schraubenkopf (5) eine umlaufende Schulter (13) hat, die durch Anlage an dem Aufnahmeteil (4) als Begrenzung für Verstellbewegungen der Einstellschraube (3) in Richtung aus dem Aufnahmeteil (4) heraus dient.

2. Einstelleinheit nach Anspruch 1, **dadurch gekennzeichnet, dass** der Ringflansch (17) des Aufnahmeteils (4) an dem ersten Bauteil (1) durch mehrere an dem Aufnahmeteil (4) vorgesehene Federschenkel (21) gehalten wird.

3. Einstelleinheit nach Anspruch 2, **dadurch gekennzeichnet, dass** die Federschenkel (21) jeweils eine mit vorgegebenem axialen Abstand zu dem Ringflansch (17) angeordnete Stirnfläche (22) haben und radial einwärts umbiegbar sind, um die Einstelleinheit in ein Loch (1a) des ersten Bauteils (1) einführen und hierbei die Federschenkel (21) umbiegen zu können, bis das erste Bauteil (1) zwischen den Stirnflächen (22) der zurückgefederten Federschenkel (21) und dem Ringflansch (17) eingespannt ist.

4. Einstelleinheit nach Anspruch 3, **dadurch gekennzeichnet, dass** die radial einwärts umbiegbaren Federschenkel (21) in fensterartigen Durchbrüchen (20) eines Zwischenabschnittes (19) des Aufnahmeteils (4) angeordnet sind.

5. Einstelleinheit nach Anspruch 4, **dadurch gekennzeichnet, dass** der Zwischenabschnitt (19) des Aufnahmeteils (4) einen an den Umriss des Loches (1a) des ersten Bauteils (1) angepassten mehreckigen Querschnitt hat.

6. Einstelleinheit nach einem der Ansprüche 3 bis 5, **dadurch gekennzeichnet, dass** die radial einwärts umbiegbaren Federschenkel (21) an ihren Außenseiten Einführschrägen (23) zum Einführen in das Loch (1a) des ersten Bauteils (1) haben.

7. Einstelleinheit nach einem der Ansprüche 2 bis 6, **dadurch gekennzeichnet, dass** der Ringflansch (17) des Aufnahmeteils (4) eine in Richtung der Federschenkel (21) konkav gewölbte Form hat, so dass er begrenzt axial verformbar ist.

8. Einstelleinheit nach einem der vorhergehenden Ansprüche, **dadurch gekennzeichnet, dass** die Anlagefläche (6) der Einstellschraube (3) an der Oberseite des Schraubenkopfes (5) vorgesehen ist.

9. Einstelleinheit nach einem der vorhergehenden Ansprüche, **dadurch gekennzeichnet, dass** das Aufnahmeteil (4) mehrere radial auswärts umbiegbare Federschenkel (26) hat, die beim Einschrauben der Einstellschraube (3) in das Aufnahmeteil (4) hinein radial nach außen umgebogen werden und nach dem Passieren der Schulter (13) der Einstellschraube (3) zurückfedern, so dass sie durch Anlage an der Schulter (13) als Begrenzung für Verstellbewegungen der Einstellschraube (3) in Richtung aus dem Aufnahmeteil (4) heraus dienen können.

10. Einstelleinheit nach Anspruch 9, **dadurch gekennzeichnet, dass** die radial auswärts umbiegbaren Federschenkel (26) in fensterartigen Durchbrüchen (25) des Aufnahmeteils (4) angeordnet sind.

11. Einstelleinheit nach Anspruch 9 oder 10, **dadurch gekennzeichnet, dass** die radial auswärts umbiegbaren Federschenkel (26) des Aufnahmeteils (4) mit der Einstellschraube (3) zusammenwirkende Einführschrägen (28) hat.

12. Einstelleinheit nach einem der vorhergehenden Ansprüche, **dadurch gekennzeichnet, dass** die Einstellschraube (3) an jedem axialen Ende mit einem Antriebsmerkmal (5, 14) zum Ansetzen eines Werkzeuges versehen ist.

13. Einstelleinheit nach einem der vorhergehenden Ansprüche, **dadurch gekennzeichnet, dass** die Einstellschraube (3) mit mindestens einer umlaufenden Dichtrippe (8) versehen ist, die mit einer glattwandigen Bohrung (16) eines Dichtungsabschnittes (15) des Aufnahmeteils (4) abdichtend zusammenwirkt.

14. Einstelleinheit nach Anspruch 13, **dadurch gekennzeichnet, dass** die umlaufende Dichtrippe (8) im Durchmesser gegenüber der glattwandigen Bohrung (16) so überdimensioniert ist, dass eine selbsthemmende Wirkung zur axialen Lagesicherung der Einstellschraube relativ zu dem Aufnahmeteil (4) entsteht.

15. Einstelleinheit nach einem der vorhergehenden Ansprüche, **dadurch gekennzeichnet, dass** die Einstellschraube (3) und das Aufnahmeteil (4) aus Kunststoff bestehen.

16. Einstelleinheit nach Anspruch 15, **dadurch gekennzeichnet, dass** der Kunststoff des Aufnahmeteils 4 und der Kunststoff der Einstellschraube (3) so aufeinander abgestimmt sind, dass der eine Kunststoff härter als der andere Kunststoff ist.

## Claims

1. Adjusting unit for adjusting the spacing between a fixedly mounted first member (1) and a resiliently mounted second member (2), consisting of an adjusting screw (3) provided with a screw head (5), and a sleeve-like receiving member (4) which are adjustable relative to each other via a pair of threads (10a, 24a), the adjusting screw having an end provided with an abutment surface (6) adapted to be loosely supported against the resiliently mounted second member (2) and the receiving member (4) having an annular flange (17) adapted to be loosely supported against the fixedly mounted first member (1) such that the spacing (A) between the first and second members (1, 2) is adjustable by a adjusting movements of the adjusting screw (3) relative to the receiving member (4), **characterized in that** the screw head (5) serves to limit adjusting movements of the adjusting screw (3) towards the receiving member (4) by engaging the receiving member (4), and that the adjusting screw (3) has an annular shoulder (13) facing away from the screw head (5) and adapted to engage the receiving member (4) for limiting adjusting movements of the adjusting screw (3) in a direction out of said receiving member (4).

2. Adjusting unit according to claim 1, **characterized in that** the annular flange (17) of the receiving member (4) is held in engagement with the first member (1) by a plurality of spring legs (21) provided on the receiving member (4).

3. Adjusting unit according to claim 2, **characterized in that** the spring legs (21) each have a face (22) axially spaced from the annular flange (17) by a predetermined amount, and are deflectable radially inwards so as to enable the adjusting unit to be inserted into a hole (1a) of the first member (1) and to deflect the spring legs (21) until the first member (1) is clamped between the faces (222) of the re-deflected spring legs (21) and the annular flange (17).

4. Adjusting unit according to claim 3, **characterized in that** the radially inwardly deflectable spring legs (21) are disposed in window-like through-holes (20) of an intermediate portion (19) of the receiving member (4).

5. Adjusting unit according to claim 4, **characterized in that** the intermediate portion (19) of the receiving member (4) has a polygonal cross-section matingly shaped with respect to the hole (1a) of the first member (1).

6. Adjusting unit according to any of claims 3 to 5, **characterized in that** the radially inwardly deflectable spring legs (21) have external tapered surfaces (23) for facilitating insertion thereof into the hole (1a) of the first member (1).

7. Adjusting unit according to any of claims 2 to 6, **characterized in that** the annular flange (17) of the receiving member (4) is of a concave arcuate shape so as to be axially deformable for a predetermined amount.

8. Adjusting unit according to any of the preceding claims, **characterized in that** the abutment surface (6) of the adjusting screw (3) is provided on the topside of the screw head (5).

9. Adjusting unit according to any of the preceding claims, **characterized in that** the receiving member (4) has a plurality of radially outwardly deflectable spring legs (26) which are deflected radially outwardly when the adjusting screw (3) is screwed into the receiving member (4), and which are deflected back when they have passed the shoulder (13) of the adjusting screw (3) such as to engage the shoulder (13) in order to limit adjusting movements of the adjustment screw (3) in a direction out of the receiving member (4).

10. Adjusting unit according to claim 9, **characterized in that** the radially outwardly deflectable spring legs (26) are disposed in window-like through-holes 825) of the receiving member (4).

11. Adjusting unit according to claim 9 or 10, **characterized in that** the radially outwardly deflectable spring legs (26) of the receiving member (4) have tapered surfaces (28) cooperating with the adjusting screw (3).

12. Adjusting unit according to any of the preceding claims, **characterized in that** the adjusting screw (3) has opposite axial ends each provided with a drive feature (5, 14) for engagement with a tool.

13. Adjusting unit according to any of the preceding claims, **characterized in that** the adjusting screw (3) has at least one annular sealing rib (8) sealingly cooperating with a smooth bore (16) of a sealing portion (15) of the receiving member (4).

14. Adjusting unit according to claim 13, **characterized in that** the annular sealing rib (8) is of a diameter exceeding that of the smooth bore (16) so as to provide for a self-locking action for securing the adjusting screw in its axial position relative to the receiving member (4).

15. Adjusting unit according to any of the preceding claims, **characterized in that** the adjusting screw and the receiving member (4) are made of plastic material.

16. Adjusting unit according to claim 15, **characterized in that** the plastic material of the receiving member and the plastic material of the adjusting screw (3) are adapted to each other such that one plastic material is harder than the other plastic material.

## Revendications

1. Unité de réglage pour régler la distance entre un premier composant (1) disposé de façon fixe et un deuxième composant (2) reposant de façon souple, composée d'une vis de réglage (3) munie d'une tête de vis (5) et d'une pièce de réception (4), de type douille, qui sont déplaçables l'une par rapport à l'autre par le biais d'un accouplement fileté (10a, 24a), la vis de réglage (3) pouvant s'appuyer de façon lâche sur le deuxième composant (2) reposant de façon souple par une surface d'appui (6) prévue à une extrémité, et la pièce de réception (4) pouvant s'appuyer de façon lâche, par une bride annulaire (17), sur le premier composant (1) disposé de façon fixe, de sorte que la distance (A) entre les deux composants (1, 2) peut être réglée, par un mouvement de déplacement de la vis de réglage (3), par rapport à la pièce de réception (4), **caractérisée en ce que** la tête de vis (5), par appui sur la pièce de réception (4), sert de limitation des mouvements de déplacement de la vis de réglage (3) dirigés vers l'intérieur de la pièce de réception (4), et **en ce que** la vis de réglage (3) a, dans une zone d'extrémité opposée à la tête de vis (5), un épaulement périphérique (13) qui, par appui sur la pièce de réception (4), sert de limitation des mouvements de déplacement de la vis de réglage (3) dirigés depuis l'intérieur de la pièce de réception (4).

2. Unité de réglage selon la revendication 1, **caractérisée en ce que** la bride annulaire (17) de la pièce de réception (4) est retenue sur le premier composant (1) par plusieurs branches élastiques (21) prévues sur la pièce de réception (4).

3. Unité de réglage selon la revendication 2, **caractérisée en ce que** les branches élastiques (21) ont respectivement une face frontale (22) disposée avec une distance axiale prédéfinie à la bride annulaire (17), et peuvent être recourbées vers l'intérieur dans le sens radial pour pouvoir introduire l'unité de réglage dans un trou (1a) du premier composant (1), et pour pouvoir ainsi recourber les branches élastiques (21) jusqu'à ce que le premier composant (1) soit serré entre les faces frontales (22) des branches élastiques (21), rappelées à la façon d'un ressort, et la bride annulaire (17).

4. Unité de réglage selon la revendication 3, **caractérisée en ce que** les branches élastiques (21) pouvant être recourbées vers l'intérieur dans le sens radial sont disposées dans des traversées (20), de type fenêtre, d'un tronçon intermédiaire (19) de la pièce de réception (4).

5. Unité de réglage selon la revendication 4, **caractérisée en ce que** le tronçon intermédiaire (19) de la pièce de réception (4) a une section polygonale adaptée au contour du trou (1a) du premier composant (1).

6. Unité de réglage selon une des revendications 3 à 5, **caractérisée en ce que** les branches élastiques (21) pouvant être recourbées vers l'intérieur dans le sens radial ont, sur leurs côtés extérieurs, des biseaux d'introduction (23) pour l'introduction dans le trou (1a) du premier composant (1).

7. Unité de réglage selon une des revendications 2 à 6, **caractérisée en ce que** la bride annulaire (17) de la pièce de réception (4) a une forme bombée de façon concave en direction des branches élastiques (21) de sorte qu'elle est déformable axialement de façon limitée.

8. Unité de réglage selon une des revendications précédentes, **caractérisée en ce que** la surface d'appui (6) de la vis de réglage (3) est prévue sur le côté supérieur de la tête de vis (5).

9. Unité de réglage selon une des revendications précédentes, **caractérisée en ce que** la pièce de réception (4) a plusieurs branches élastiques (26), pouvant être recourbées vers l'extérieur dans le sens radial, qui, lors du vissage de la vis de réglage (3) dans la pièce de réception (4), sont recourbées vers l'extérieur dans le sens radial et qui, après le franchissement de l'épaulement (13) de la vis de réglage (3), reviennent à la façon d'un ressort de sorte que, sous l'action de l'appui sur l'épaulement (13), elles peuvent servir de limitation des mouvements de déplacement de la vis de réglage (3) dirigés depuis l'intérieur de la pièce de réception (4).

10. Unité de réglage selon la revendication 9, **caractérisée en ce que** les branches élastiques (26) pouvant être recourbées vers l'extérieur dans le sens radial sont disposées dans des traversées (25), de type fenêtre, de la pièce de réception (4).

11. Unité de réglage selon la revendication 9 ou 10, **caractérisée en ce que** les branches élastiques (26) de la pièce de réception (4) pouvant être recourbées vers l'extérieur dans le sens radial ont des biseaux d'introduction (28) coopérant avec la vis de réglage (3).

12. Unité de réglage selon une des revendications précédentes, **caractérisée en ce que** la vis de réglage (3) est, à chaque extrémité axiale, munie d'un repère d'entraînement (5, 14) pour la pose d'un outil.

13. Unité de réglage selon une des revendications précédentes, **caractérisée en ce que** la vis de réglage (3) est munie d'au moins une nervure d'étanchéité (8) périphérique qui coopère de façon étanche avec un alésage à paroi lisse (16) d'un segment de joint d'étanchéité (15) de la pièce de réception (4).

14. Unité de réglage selon la revendication 13, **caractérisée en ce que** la nervure d'étanchéité (8) périphérique est, au niveau du diamètre, surdimensionnée par rapport à l'alésage à paroi lisse (16) de sorte qu'il en résulte une action de blocage automatique pour le blocage de position axial de la vis de réglage relativement à la pièce de réception (4).

15. Unité de réglage selon une des revendications précédentes, **caractérisée en ce que** la vis de réglage (3) et la pièce de réception (4) sont réalisées en matière plastique.

16. Unité de réglage selon la revendication 15, **caractérisée en ce que** la matière plastique de la pièce de réception (4) et la matière plastique de la vis de réglage (3) sont harmonisées l'une par rapport à l'autre de sorte qu'une matière plastique est plus dure que l'autre matière plastique.
